# EUROPEAN PATENT APPLICATION

(11) **EP 3 032 766 A1**
(43) Date of publication of application: **15.06.2016**
(21) Application number: 14306969.8
(22) Date of filing: 08.12.2014
(51) Int. Cl.: H04H 60/02, G11B 27/031, H04N 21/218

(54) **Method and device for generating personalized video programs**

(71) Applicant: Thomson Licensing, 92130 Issy-les-Moulineaux (FR)
(72) Inventor: Fontaine, Patrick, 35576 Cesson Sevigne Cédex (FR); Jeanne, Ludovic, 35576 Cesson Sevigne Cédex (FR); Demoulin, Vincent, 35576 Cesson Sevigne Cédex (FR)
(74) Representative: Huchet, Anne

(57) **Abstract**

The present disclosure relates to a Method for generating a personalized video program. It comprises the steps of:
- providing at least two synchronized video contents generated by at least two cameras;
- providing edition data representative of the edition of a main program, said main program comprising a succession of synchronized video segments from said at least two synchronized video contents, and said edition data comprising information on said succession;
- providing data representative of a user profile; and
- generating the personalized video program from said at least two video synchronized contents based on said user profile data and said edition data.

## Description

### 1. Technical Field

The present disclosure relates generally to the field of entertainment TV shows, more precisely to the work of the television director. It can be notably applied to shows like debates, sports, concerts, variety shows where several cameras capturing several views of the show are available.

### 2. Background Art

During a live show, the television director is usually in front of multiple screens presenting outputs of cameras on the show set. Each camera captures a view of the show. The TV director switches regularly the view to be broadcasted. He selects a view according to several parameters among which:
- the action and/or the persons on the set: for example, for a debate, the director can select the person who is talking or the person who is listening,
- the time since last camera switch: according to the nature of the show, the director can switch more or less rapidly the views to be broadcasted,
- the actions to be followed: somebody will move,....

The director is also in charge of all the cameramen and orders them to modify the video framing or to focus on a specific point when something happens on the field.

For all these actions, the TV director takes also into account other parameters, like directives of the producer of the show or the kind of program.

At the end, the program which is broadcasted reflects the requirements of the director and/or the producer. It does not take into account the profile and/or the desires of the viewer.

With the arrival of new technologies, it is now possible to deliver several views of the same program to the home. These several views can be delivered in two ways. In a first approach (Hybrid Broadcast Broadband TV or HbbTV), a main program (which is a succession of views selected by the director) or a main view is broadcasted while additional views are delivered via broadband access (internet). In a second approach, all the views are broadcasted directly to the home TV.

In both approaches, the viewer has to be proactive and must select alternative views manually if he wants to display a program that better suits him.

It would hence be desirable to provide a method for creating a video program that is better adapted to the user without denying the choices of the director.

### 3. Summary

The present disclosure proposes a method for generating a personalized video program, the method comprising the steps of:
- receiving at least two synchronized video contents generated by at least two cameras;
- receiving edition data representative of the edition of a main program, said main program comprising a succession of synchronized video segments from said at least two synchronized video contents, and said edition data comprising information on said succession;
- generating the personalized video program from said at least two video synchronized contents based on data representative of a user profile and said edition data.

The main program is the program edited by the TV director from the different video contents or views that he receives from the different cameras.

In a particular embodiment, the personalized video program is generated by amending the main program according to the user profile data, said amending consisting in replacing, in said main program, at least a part of one video segment from a first video content of said at least two synchronized video contents by at least one synchronized video segment of same duration from a second video content of said at least two synchronized video contents.

In a particular embodiment, the step of providing edition data representative of the edition of a main program comprises the steps of:
- providing the main program;
- comparing said main program to said at least two synchronized video contents, and
- generating said edition data based on the results of said comparison.

In a particular embodiment, the edition data are generated by a end-user device receiving the main program and the at least two synchronized video contents.

In a variant, the edition data are generated by the video content provider and transmitted as metadata by the provider to the end-user device.

In a particular embodiment, the method further comprises a step of receiving metadata on the content of said at least two video contents and wherein the personalized video program is generated based on said user profile data, said edition data and said metadata.

In a particular embodiment, the user profile data are provided through a user interface.

The present disclosure concerns also a system for generating a personalized video program, said system comprising :
- means for providing at least two synchronized video contents generated by at least two cameras;
- means for providing edition data representative of the edition of a main program, said main program comprising a succession of synchronized video segments from said at least two synchronized video contents, and said edition data comprising information on said succession;
- means for providing data representative of a user profile; and
- means for generating the personalized video program from said at least two video synchronized contents based on said user profile data and said edition data.

The present disclosure concerns also a end-user device for generating a personalized video program, said device comprising :
- means for receiving at least two synchronized video contents;
- means for receiving and/or determining edition data representative of the edition of a main program, said main program comprising a succession of synchronized video segments from said at least two synchronized video contents, and said edition data comprising information on said succession;
- means for generating the personalized video program from said at least two video synchronized contents based on data representative of a user profile and said edition data.

According to another embodiment, the device for generating a personalized video program comprises at least a processor configured to:
- receive at least two synchronized video contents;
- receive and/or determine edition data representative of the edition of a main program, said main program comprising a succession of synchronized video segments from said at least two synchronized video contents, and said edition data comprising information on said succession;
- generate the personalized video program from said at least two video synchronized contents based on data representative of a user profile and said edition data.

In a particular embodiment, the end-user device further comprises means for receiving the main program and means for generating said edition data based on the received main program and the received synchronized video contents.

The present disclosure also relates to a computer program product comprising instructions of program code for execution by at least one processor to perform the method of generating a personalized video program, when the program is executed on a computer.

The present disclosure also relates to a processor readable medium having stored therein instructions for causing a processor to perform the method of generating a personalized video program.

While not explicitly described, the present embodiments may be employed in any combination or subcombination.

### 4. Brief description of the drawings

The present disclosure can be better understood with reference to the following description and drawings, given by way of example and not limiting the scope of protection, and in which:
- Figure 1 is a schematic view of the inventive method;
- Figure 2 illustrates a first application of the inventive method based on a first example of user profile;
- Figure 3 is a flow chart illustrating the generation of the personalized video program of Figure 2;
- Figure 4 illustrates a second application of the inventive method based on a second example of user profile;
- Figure 5 illustrates a third application of the inventive method based on a third and fourth examples of user profiles; and
- Figure 6 is a block diagram for implementing the inventive method.

The components in the figures are not necessarily to scale, emphasis instead being placed upon illustrating the principles of the present disclosure.

### 5. Description of embodiments

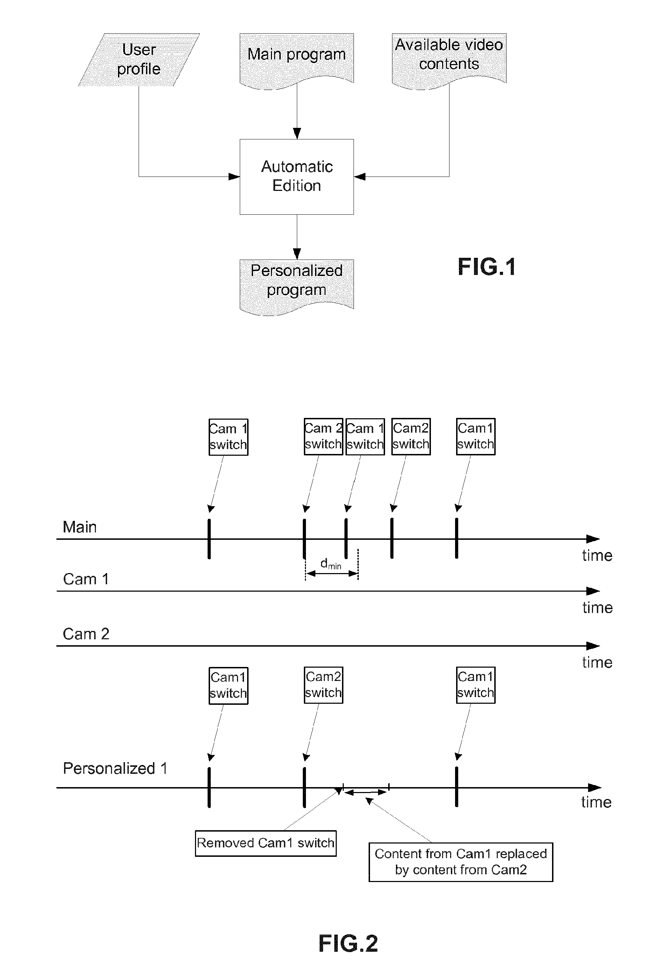

**Figure 1** is a schematic view of the method according to the present disclosure. This method is implemented in an end-user device, like a TV, a set-top box, a computer or a mobile device.

The end-user device receives a main program edited by a TV director, a user profile and a plurality of available video contents. The available video contents are synchronized video contents delivered by a plurality of cameras on the set and the main program is built from these available video contents. The main program is composed of a succession of synchronized video segments from said available video contents. In comparison to the main program, the available video contents comprise additional video segments that can be used to modify the main program according to the user profile data. The main program is advantageously synchronized with the different video contents from which they derive or they include a common temporal reference or time stamp.

The main program and the available video contents are streamed to the end-user device. In a variant, the main program is not streamed but edition data including data suitable for recovering the main program from the available video contents are streamed to the end-user device in order to edit the main program in the end-user device and hence save data rate.

The user profile data are sent to the end-user device or created via a user interface within the end-user device. The user profile data can be as simple as "less camera switch" or be "stay longer on Pete Sampras when serving". These profile data can be directly inputted in the end-user device via the user interface. They can also be issued from information inputted by the user via the user interface. For example, the user profile data "less camera switch" can be derived from the age of the user inputted by the user. An old person will prefer less camera switch (change of camera views) than a young person. Other user profile data will be given in the examples described hereinafter.

As shown on figure 1, the method of the present disclosure generates a personalized video program from the main program (or the edition data of this main program), the available video contents and the user profile data.

The results of the inventive method are illustrated hereinafter via different user profiles.

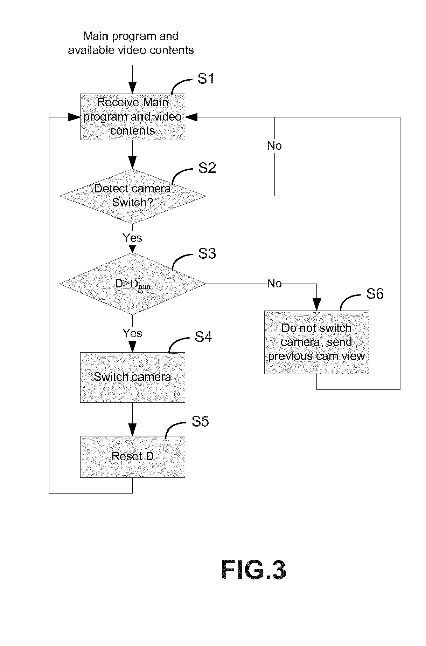

**Figures 2** **and** **3** illustrate the case of a profile with "less camera switch" preference. The end-user device receives the main program and three video contents generated by 3 distinct cameras: Cam1, Cam2 and Cam 3. According to the present disclosure, the main program is amended in order to have less camera switches. In figure 2, the personalized video program generated by the method comprises less camera switches. A switch to the Cam2 and a switch to Cam 1 are removed.

This switch frequency reduction can be obtained by defining a minimal duration Dₘᵢₙ between two camera switches. Figure 3 is a flow chart showing how to generate the personalized video program of figure 2 when a minimal duration Dₘᵢₙ between two camera switches.

In a step S1, the main program and the available video contents are received by the end-user device. The main program and the available video contents are synchronized if necessary.

In a step S2, a camera switch is detected by comparing the main program and the available video contents. In a variant, edition data (including data suitable for recovering the main program from the available video contents) are received by the end-user device and the camera switches are detected based on these edition data.

In a step S3, the duration D between a current camera switch and a previous camera switch of the main program is measured and compared to the minimal duration Dₘᵢₙ. If the measured duration is equal or greater than Dₘᵢₙ, the current camera switch is kept (step S4), the duration D is reset (step S5) and the process is reiterated for the next camera switch. If the measured duration is lower than Dₘᵢₙ, the current camera switch is removed (step S6) and the video segment of the main program between this current camera switch and the next camera switch is replaced by a synchronized video segment of same duration coming from the available video content corresponding to the video content of the main program before the current switch camera.

In the example of figure 2, a switch to Cam1 is removed since the duration between this current switch and the previous switch (switch to cam2) is lower than Dₘᵢₙ. The video segment between this current switch (switch to Cam1) and the next switch (switch to cam2) is replaced by video segment of same duration coming from the video content Cam2. The replacement of video content from Cam1 by video content from Cam2 leads to the removal of the next switch to Cam 2 (which no longer has any reason to exist).

In this case (figures 2 and 3), the end-user device do not need to receive metadata on the available video contents. Such metadata are not required to reduce camera switch frequency.

In other cases, metadata on the content of the available video contents can be required for applying the preferences of the user profile to the main program. For example, the user profile can comprise a preference for a personalized program containing only a kind of framing, for instance close-up. This user profile is for example convenient for visually impaired people. In that case, some information is required about the content of the available video contents.

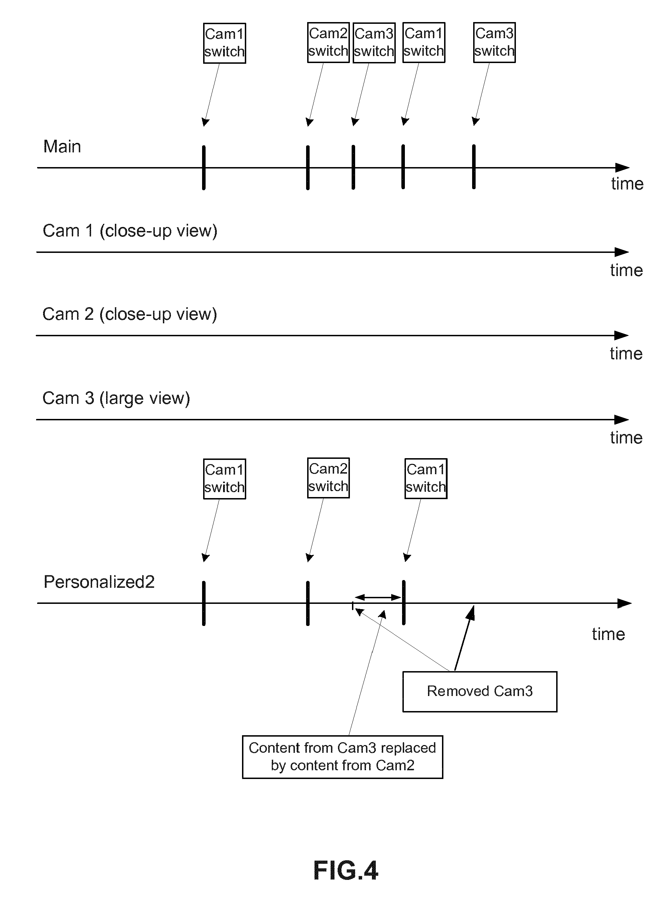

In a very basic implementation assuming that a kind of framing is always associated with a video content by a given camera, the generation of the personalized video program may consist in removing, from the main program, video segments coming from available video contents having undesired framing and replacing them by video segments having the desired framing. This case is illustrated by **Figure 4****.** In this figure, Cam1 and Cam2 represent close-up views while Cam3 is a large view. In this case, the large view video segments (coming from Cam3) in the main program are removed and replaced by video segments from Cam1 or Cam2.

In alternative implementations, a given camera is not always associated with a specific kind of framing. The TV director can order a cameraman to frame a close-up just for a short period of time. In this case, contents of the views must be tagged with synchronized metadata in order to generate the personalized video program. Such metadata can be generated in the studio at capture time and transmitted with the available video contents or they can be computed on the fly in the end-user device.

The above described method can be applied with very different user profiles. As another example, let's assume that a user is watching tennis on television. The user's profile indicates that he prefers Pete Sampras. The metadata associated to the different available video contents will indicate when Pete Sampras is present in these views. In this case, the inventive method applies a rule (issued from the user preferences) to stay longer on views of Pete than on other views.

As another example, during a football game, the inventive method can select views according to preferences retrieved from the user profile:
- the nationality/home address of the user can indicate his preference for a country/town during a football event like the world cup;
- his favorite player can be provided;
- one user can prefer large view of the field and stadium views in order to capture the atmosphere, while another can prefer to watch the goal keeper.

The inventive method adapts automatically the main program to better suit these preferences.

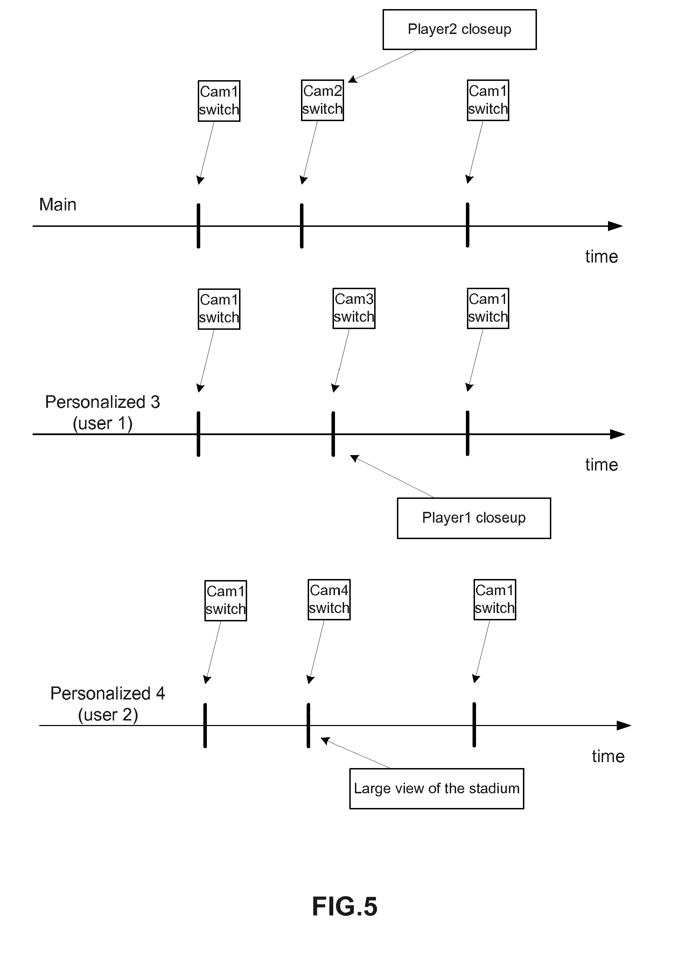

**Figure 5** illustrates the personalized video program in the case of two users with different profiles:
- User 1 prefers close-up of Player1 (for example, Pete Sampras), and
- User 2 prefers large views.

In both cases, the inventive method takes into account the main program (generated by the TV director) for generating the personalized video programs. In the first case (user 1), the Cam2 switch is replaced by a Cam3 switch in order to have close-ups of the preferred player. The Cam3 switch is eventually delayed compared to the Cam2 switch as shown in Figure 5. In the second case, the Cam2 switch is replaced by a Cam4 switch to have a large view of the stadium to fit the user2's profile.

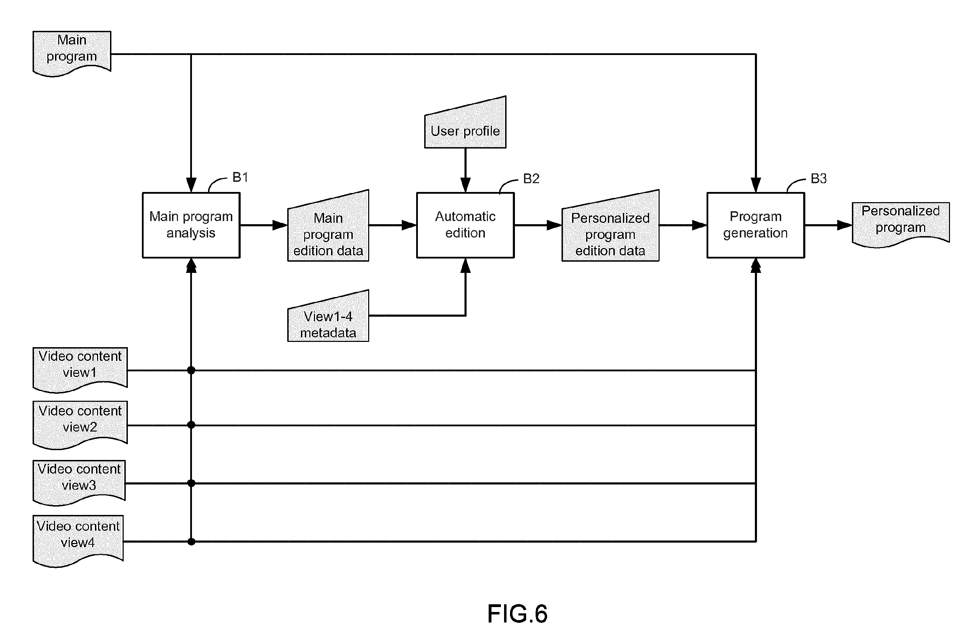

**Figure 6** is a block diagram of a device implementing the above described method. The device comprises three blocks:
- a main program analysis block B1;
- an automatic edition block B2; and
- a program generation block B3.

These blocks are present in the end-user device which is for example a set-top box, a tablet, a smartphone or a smart TV.

The main program analysis block B1 determines edition data of the main program by comparing the main program and the different views (views 1 to 4) of the available video contents. This block allows retrieving edition decisions from the TV director and notably the switches between the different views by comparing the main program with the different views 1-4 in order to determine the current view of the main program selected by the TV director. Before analysis, this block may also synchronize the available video contents with the main program if necessary.

If the main program and the available video contents are synchronized, the block B1 is not mandatory in the end-user device since the edition data of the main program can be provided as a metadata file streamed with the main program from the broadband or broadcast access.

The automatic edition block B2 applies a set of rules in order to compute personalized program edition data based on at least one user preferences of the user profile or on user preferences of a group of user profiles and the edition data of the main program and, if necessary, from metadata of views 1-4. The group of user profiles may for example comprise the user profiles of a whole family. As described before, the metadata of views 1-4 are not mandatory in some cases, like for example when the personalized edition consists in only removing some camera switches (see figure 2) in order to reduce the switch frequency.

The program generation block B3 generates the personalized program based on the edition data computed by the block B2. This block receives the main program and the available video contents (views 1-4) and selects, according to edition data provided by the block B2, select either the main program or one of the views 1-4 to generate the personalized program.

As explained above, the inventive method needs:
- data (or preferences) of the user profile;
- the edition data of the main program in order to somehow follow the TV director choices; and
- if necessary, metadata on the available video contents (views 1-4).

The user profile data are inputted to the user-end device via a user interface wherein the user can check boxes for selecting preferences. Edition Rules are derived from these user preferences.

The edition data of the main program (edition choices of the TV director) are generated in the end-user device or provided as metadata to the end-user device. In the first case, the edition data are locally generated by on-the-fly comparison of the video images. This operation does not require a lot of power as it simply consists in images comparison between the main program and the available video contents (views). Advantageously, this process uses a view switching detector that triggers the comparisons only when needed. In the second case, the edition data of the main program sent as metadata to the end-user device and are synchronized with the main program. These metadata are computed directly in the studio or are generated by analysis on a distant server. These main program edition data can consist in a time reference (for synchronization) and the identified available video content. It can also contain the switching times.

The metadata on the different available video contents (views 1-4) are provided to the end-user device. They can be available on a server accessible through internet connection. In this approach, the views' type of content is almost fixed, meaning that for example: view1 is a view of the referee, view2 is a close-up of player2, view3 is a close-up of player1, and view4 is a large view of the stadium. The metadata of the views can be stored in a file that is accessible by the end-user device through the internet connection. The description may be updated to reflect changes of the views' type but this update is rather slow as the views' type is almost fixed, i.e. there is no tight synchronization.

In a variant, the metadata on the different views are sent to the end-user device synchronized with the streams of the available video contents (views). In this approach, the metadata (close-up, large view, people in the scene, ...) are delivered on the same communication medium as the video contents streams or, if the video content streams are broadcasted, metadata can be delivered by a broadband access.

If video contents streams and metadata are both broadcasted, synchronization can be guaranteed by using the MPEG7 standard over a DVB network as described in "Synchronized MPEG-7 metadata broadcasting over DVB networks in an MHP application framework", A.López, D.González, J.Fabregat, A.Puig, J.Mas, M.Noé, E.Villalon, F.Enrich, V.Domingo, G.Fernández, Proc. of International Broadcasting Convention, 2003. In this reference, the synchronization between the video contents streams and metadata can be frame accurate.

If metadata are delivered by broadband access and video contents streams by broadcast, the video contents streams and the corresponding metadata can be fully synchronized by using the method described in the patent application WO2012/049305.

In a variant, the metadata on the different available video contents (views 1-4) are locally generated by a video analysis process in the end-user device. In this approach, the end-user device has sufficient processing power in order to analyze the video content streams and to generate metadata on these contents on-the-fly. The generated metadata can be directly sent to the block B2 or stored in a local metadata file.

The device of figure 6 is for example implemented under the of a programmable logical circuit of type FPGA (Field-Programmable Gate Array) for example, ASIC (Application-Specific Integrated Circuit) or a DSP (Digital Signal Processor).

According to a variant, the blocks of figure 6 correspond to functional block of an algorithm stored in a memory and executed by one or several processors, for example CPU and/or GPUs. According to this variant, the device of figure 6 comprises one or several processors associated with a memory, for example Random Access Memory or RAM comprising registers. The memory stores instructions of an algorithm implementing the inventive method described hereinabove. The memory may also be used to store the data representative of the video contents and/or the edition data and/or the data representative of the user profile.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. Method for generating a personalized video program, the method being **characterized in that** it comprises:
- receiving at least two synchronized video contents;
- receiving edition data representative of the edition of a main program, said main program comprising a succession of synchronized video segments from said at least two synchronized video contents, and said edition data comprising information on said succession;
- generating the personalized video program from said at least two video synchronized contents based on data representative of a user profile and said edition data.

2. Method according to claim 1, wherein the personalized video program is generated by amending the main program according to the user profile data, said amending consisting in replacing, in said main program, at least a part of one video segment from a first video content of said at least two synchronized video contents by at least one synchronized video segment of same duration from a second video content of said at least two synchronized video contents.

3. Method according to claim 1 or 2, wherein said receiving of edition data representative of the edition of a main program comprises:
- receiving the main program;
- comparing said main program with said at least two synchronized video contents, and
- generating said edition data based on the results of said comparison.

4. Method according to claim 3, wherein the edition data are generated by a end-user device receiving the main program and the at least two synchronized video contents.

5. Method according to claim 1 or 2, wherein the edition data are received as metadata.

6. Method according to any one of claims 1 to 5, further comprising receiving metadata on the content of said at least two video contents and wherein the personalized video program is generated based on said user profile data, said edition data and said metadata.

7. Method according to any one of claims 1 to 6, wherein the user profile data are provided through a user interface.

8. System for generating a personalized video program, said system being **characterized in that** it comprises:
- means for providing at least two synchronized video contents generated by at least two cameras;
- means for providing edition data representative of the edition of a main program, said main program comprising a succession of synchronized video segments from said at least two synchronized video contents, and said edition data comprising information on said succession;
- means for providing data representative of a user profile; and
- means for generating the personalized video program from said at least two video synchronized contents based on said user profile data and said edition data.

9. Device for generating a personalized video program, **characterized in that** it comprises:
- means for receiving at least two synchronized video contents;
- means for receiving and/or determining edition data representative of the edition of a main program, said main program comprising a succession of synchronized video segments from said at least two synchronized video contents, and said edition data comprising information on said succession;
- means for generating the personalized video program from said at least two video synchronized contents based on data representative of a user profile and said edition data.

10. Device according to claim 9, further comprising means for receiving the main program and means for generating said edition data based on the received main program and the received synchronized video contents.

11. Computer program product, **characterized in that** it comprises instructions of program code for executing steps of the method according to one of claims 1 to 7, when said program is executed on a computer.

12. A processor readable medium having stored therein instructions for causing a processor to perform at least the steps of the method according to any of claims 1 to 7.
